# EUROPEAN PATENT APPLICATION

(11) **EP 4 246 264 A1**
(43) Date of publication of application: **20.09.2023**
(21) Application number: 23161911.5
(22) Date of filing: 14.03.2023
(51) Int. Cl.: G05B 23/02, G05B 19/418, G06Q 50/04

(54) **ANALYTICAL SYSTEM FOR SURFACE MOUNT TECHNOLOGY (SMT) AND METHOD THEREOF**

(30) Priority: 15.03.2022 US 202217695719
(71) Applicant: Claritrics Inc d.b.a Buddi AI, New York, NY 10036 (US)
(72) Inventor: SWAMINATHAN, Ram, New York, 10036 (US); KRISHNAMOORTHY, Harinath, 600101 Chennai (IN); SHARAFATH, Mohammed, 612602 Kumbakonam (IN); SURESH, Praveen Kumar, 636006 Salem (IN); RAJKUMAR, Sriram, 600024 Chennai (IN); SANTHIAPPAN, Sudarsun, 600077 Chennai (IN)
(74) Representative: Savi, Massimiliano

(57) **Abstract**

The present disclosure describes a method, apparatus, and computer readable medium for Surface Mount Technology (SMT). The system comprising a Data Integration (DI) platform configured to collate data from one or more units in an assembly line, an Artificial Intelligence (AI) platform configured to process the collated data, using one or more machine learning techniques, to generate predictive and preventive analysis for the one or more units present in the assembly line. The system further disclose a Digital Twin Simulation (DTS) platform configured to simulate an exact replica of all the units present in the assembly line, provide visual representation, allow the one or more operators in the assembly line to take at least one action and provide the at least one action taken by the one or more operators in the assembly line as feedback signal to AI platform to improve prediction rate of said system.

## Description

### TECHNICAL FIELD

The present disclosure generally relates to the field of Surface Mount Technology (SMT). Particularly, the present disclosure relates to an intelligent system and a method for predicting errors, ahead of time, and performing preventing maintenance to avoid such errors, in the SMT Manufacturing Assembly line.

### BACKGROUND

Surface Mount Technology (SMT) manufacturing is considered as the backbone for any large-scale production of electronic equipment for the domestic, industrial, and strategic applications. SMT manufacturing is predominantly an automated process implemented as an assembly line with several automatic machines. Thus, machine maintenance becomes a very critical part in the manufacturing process to avoid down-time, minimize repairs, and increase productivity.

In the past few decades, several optimal maintenance practices have been developed to increase the yield and minimize wastage of material and labor. Mainly, the maintenance practices can be categorized into two buckets (i). Reactive Maintenance and (ii). Preventive Maintenance. Reactive maintenance is a costly procedure that is done only after a breakdown or failure, thus such a process neither helps in minimizing the downtime or repairs nor increases productivity. Whereas Preventive Maintenance is a process that is done periodically. However, in Preventive Maintenance processes the period of maintenance is decided based on the individual experiences which need not be optimal.

With the advent of Industrial standard 4.0, Industries are moving towards preventive maintenance processes. However, existing preventive maintenance processes have their own challenges. For example, conventional statistical process control used in existing technologies is not effective in high yield setting. Further, conventional systems employ data science techniques to understand the pattern which is underlying in the data which is scattered at different places. Moreover, they do not take important KPI's such as count, reject ratio, rate. etc. into consideration for analyzing if a machine requires Preventive maintenance or not.

Thus, their exist a need in the technology for an Intelligent predictive and preventive system and method that can not only predict any error in the SMT manufacturing assembly line a head of time but can also perform preventive maintenance to avoid any failure/breakdown in the SMT manufacturing assembly line and is compatible with industrial standard 4.0.

The information disclosed in this background section is only for enhancement of understanding of the general background of the invention and should not be taken as an acknowledgement or any form of suggestion that this information forms the prior art already known to a person skilled in the art.

### SUMMARY

One or more shortcomings discussed above are overcome, and additional advantages are provided by the present disclosure. Additional features and advantages are realized through the techniques of the present disclosure. Other embodiments and aspects of the disclosure are described in detail herein and are considered a part of the disclosure.

An object of the present disclosure is to predict errors in an SMT manufacturing assembly line, ahead of time.

Another objective of the present disclosure is to perform preventive maintenance of various machines in the assembly line in view of predicted errors and avoid the SMT manufacturing assembly line from possible failure/breakdown.

Another object of the present disclosure is to provide an intelligent predictive and preventive system that is compatible with Industrial standard 4.0.

The above stated objects as well as other objects, features, and advantages of the present disclosure will become clear to those skilled in the art upon review of the following description, the attached drawings, and the appended claims.

According to an aspect of the present disclosure, methods, apparatus, and computer readable media are provided for predicting errors, ahead of time, and performing preventing maintenance to avoid such errors, in the SMT Manufacturing Assembly line .

In a non-limiting embodiment of the present disclosure, the present application discloses an analytical system for Surface Mount Technology (SMT). The analytical system comprising a Data Integration (DI) platform configured to collate data from one or more units in an assembly line. The DI platform is configured to receive and collate data from the one or more units in different formats and store said collated data. The analytical system further comprises an Artificial Intelligence (AI) platform operatively coupled to the DI platform. Said AI platform is configured to fetch the collated data from the DI platform and process the collated data, using one or more machine learning techniques, to generate predictive and preventive analysis for the one or more units present in the assembly line. The analytical system additionally includes a Digital Twin Simulation (DTS) platform operatively coupled to the AI platform and the DI platform. Said DTS platform is configured to simulate an exact replica of all the units present in the assembly line, in the same order, provide visual representation of the predictive and preventive analysis, generated by the AI platform, in readable format to one or more operators in the assembly line, over the simulated replica. Further, the DTS platform is configured to allow the one or more operators in the assembly line to take at least one action, in response to the generated predictive and preventive analysis and provide the at least one action taken by the one or more operators in the assembly line as feedback signal to AI platform to improve prediction rate of said system. The analytical system may further include a notification platform operatively coupled to the AI platform and the DTS platform, wherein said notification platform allows the AI platform to share notification regarding predictive and preventive analysis of the one or more units in the assembly line with the one or more operators.

In another non-limiting embodiment of the present disclosure, the present application discloses an analytical method for Surface Mount Technology (SMT). The method comprising the steps of collating data from one or more units in an assembly line in different formats and storing said collated data, fetching the collated data and processing said collated data, using one or more machine learning techniques. Said method further comprises generating predictive and preventive analysis for the one or more units present in the assembly line, in response to said processing and simulating an exact replica of all the units present in the assembly line, in the same order. The method may further include providing visual representation of the predictive and preventive analysis thus generated, in readable format to one or more operators in the assembly line, over the simulated replica and allowing the one or more operators in the assembly line to take at least one action, in response to the generated predictive and preventive analysis. The method further discloses providing the at least one action taken by the one or more operators in the assembly line as feedback signal to improve the prediction rate of said system and providing notification regarding predictive and preventive analysis of the one or more units in the assembly line with the one or more operators.

In another non-limiting embodiment of the present disclosure, the present application discloses a non-transitory computer readable media storing one or more instructions executable by at least one processor. The one or more instructions may comprise one or more instructions for collating data from one or more units in an assembly line in different formats and storing said collated data. The one or more instructions may further comprise one or more instruction for fetching the collated data and processing said collated data, using one or more machine learning techniques. The one or more instructions may further comprise one or more instructions for generating predictive and preventive analysis for the one or more units present in the assembly line, in response to said processing and for simulating an exact replica of all the units present in the assembly line, in the same order. The one or more instructions may further comprise one or more instructions for providing visual representation of the predictive and preventive analysis thus generated, in readable format to one or more operators in the assembly line, over the simulated replica and for allowing the one or more operators in the assembly line to take at least one action, in response to the generated predictive and preventive analysis. The one or more instructions may further comprise one or more instructions for providing the at least one action taken by the one or more operators in the assembly line as feedback signal to improve the prediction rate of said system and for providing notification regarding predictive and preventive analysis of the one or more units in the assembly line with the one or more operators.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF DRAWINGS

Further aspects and advantages of the present disclosure will be readily understood from the following detailed description with reference to the accompanying drawings. Reference numerals have been used to refer to identical or functionally similar elements. The figures together with a detailed description below, are incorporated in and form part of the specification, and serve to further illustrate the embodiments and explain various principles and advantages, in accordance with the present disclosure wherein:
**Figure 1** shows an exemplary environment **100** for operating analytical system for Surface Mount Technology (SMT) manufacturing, in accordance with some embodiments of the present disclosure.
**Figure 2** shows by way of a block diagram **200,** the Data Integration platform **110** interacting with one of the assembly line 104(a) illustrated in **Figure 1****,** in accordance with some embodiments of the present disclosure.
**Figure 3** shows by way of a block diagram **300,** the AI platform **114,** in accordance with some embodiments of the present disclosure.
**Figure 4** shows a detailed representation **400** of a simulated replica of the assembly line **104(a)** generated and presented over the operator system **108(a),** in accordance with some embodiments of the present disclosure.
**Figure 5** shows a detailed process flow diagram **500** for predicting, by the analytical system **102,** the next preventive maintenance for the SPI machine/unit in the assembly line **104(a),** in accordance with some embodiments of the present disclosure.
**Figure 6** shows a detailed process flow diagram **600** representation predicting, by the analytical system **102,** a solder pad failure in the SPI machine/unit in the assembly line **104(a),** in accordance with some embodiments of the present disclosure.
**Figure 7** shows a detailed process flow diagram **700** representing predicting, by the analytical system **102,** the Placement, Pre-Reflow, Post Reflow and Functional Errors error at SPI stage using the data available in SPI, in accordance with some embodiments of the present disclosure.
**Figure 8** depicts a flowchart **800** illustrating a method for predicting errors, ahead of time, and performing preventing maintenance to avoid such errors, in the SMT Manufacturing Assembly line, in accordance with some embodiments of the present disclosure.

It should be appreciated by those skilled in the art that any block diagrams herein represent conceptual views of the illustrative systems embodying the principles of the present disclosure. Similarly, it will be appreciated that any flowcharts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present disclosure described herein as "exemplary" is not necessarily to be construed as preferred or advantageous over other embodiments.

While the disclosure is susceptible to various modifications and alternative forms, specific embodiments thereof have been shown by way of example in the drawings and will be described in detail below. It should be understood, however, that it is not intended to limit the disclosure to the particular form disclosed, but on the contrary, the disclosure is to cover all modifications, equivalents, and alternatives falling within the spirit and the scope of the disclosure.

The terms "comprise(s)", "comprising", "include(s)", or any other variations thereof, are intended to cover a non-exclusive inclusion, such that a setup, device, apparatus, system, or method that comprises a list of components or steps does not include only those components or steps but may include other components or steps not expressly listed or inherent to such setup or device or apparatus or system or method. In other words, one or more elements in a device or system or apparatus proceeded by "comprises... a" does not, without more constraints, preclude the existence of other elements or additional elements in the system.

In the following detailed description of the embodiments of the disclosure, reference is made to the accompanying drawings that form a part hereof, and in which are shown by way of illustration of specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense. In the following description, well known functions or constructions are not described in detail since they would obscure the description with unnecessary detail.

The terms like "at least one" and "one or more" may be used interchangeably throughout the description. The terms like "a plurality of' and "multiple" may be used interchangeably throughout the description. Further, the terms like "SMT manufacturing assembly line" and "SMT assembly line" and "assembly line" may be used interchangeably throughout the description. Further, the terms like "AI based analytical system" and "analytical system" may be used interchangeably throughout the description.

The present disclosure proposes an Artificial Intelligence (AI) based analytical system that adopts Industry 4.0 standard to avoid unscheduled downtime using Predictive Maintenance (PdM). The Predictive Maintenance (PdM) techniques disclosed in the present disclosure predicts when a failure might occur in an SMT manufacturing assembly line, in real-time. Further, the Predictive Maintenance (PdM) techniques disclosed in the present disclosure prevent the occurrence of the failure by performing maintenance before such failure may occur. Precisely, the predictive maintenance techniques disclosed in the present disclosure allows the maintenance frequency to be as low as possible to prevent unplanned reactive maintenance, without incurring costs associated with doing preventive maintenance. Further, said AI based Analytics system provides a vendor-agnostic platform with high interoperability across various data formats and provides horizontal data integration.

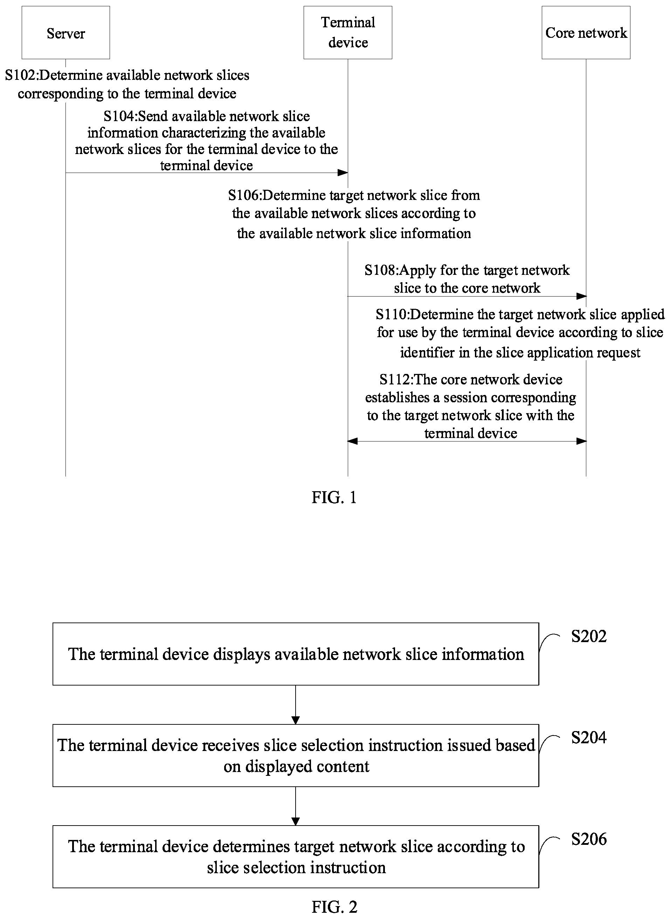

Referring now to **Figure 1****,** which illustrates an environment **100,** disclosing an AI based analytical system **102,** operatively connected to a plurality of SMT manufacturing assembly line **104(a)-104(n)** via at least one network **106.** In an exemplary embodiment, the analytical system **102** may remain operatively connected to the plurality of SMT manufacturing assembly line **104(a)-104(n)** so as to collate data from one or more units from these assembly lines **104(a)-104(n)** for analysis (discussed in detail in forthcoming paragraphs of the disclosure). Additionally, the analytical system **102** may remain operatively connected to a plurality of operator system **108(a)- 108(n)** via the at least one network **106.** In an exemplary embodiment, the analytical system **102** may remain operatively connected to the plurality of operator system **108(a)- 108(n)** to provide them an alert as regards any upcoming error in any of the units of the plurality of assembly line **104(a)-104(n)** and provide preventive measures to rectify any such error and avoid failure/shutdown of any of the plurality of SMT manufacturing assembly line **104(a)-104(n).**

The network **106** may comprise a data network such as, but not restricted to, the Internet, Local Area Network (LAN), Wide Area Network (WAN), Metropolitan Area Network (MAN), etc. In certain embodiments, the network **106** may include a wireless network, such as, but not restricted to, a cellular network and may employ various technologies including Enhanced Data rates for Global Evolution (EDGE), General Packet Radio Service (GPRS), Global System for Mobile Communications (GSM), Internet protocol Multimedia Subsystem (IMS), Universal Mobile Telecommunications System (UMTS) etc. In one embodiment, the network **106** may include or otherwise cover networks or subnetworks, each of which may include, for example, a wired or wireless data pathway.

In a non-limiting embodiment, the data generated by one or more machines/units of the plurality of assembly line **104(a)-104(n)** is very critical for understanding the machine/unit behavior over time. Typically, data is generated from relevant sensors for capturing physical parameters such as temperature, humidity, vibration, magnetic field, and optical sensors. However, many modern inspection machines/units of the plurality of assembly line **104(a)-104(n)** generate image, audio and video data from the inspection view port which carries tones of information about the processes and products within the assembly line.

As shown in **Figure 1****,** the analytical system **102** may include a Data Integration (DI) platform **110** configured to collate such data from one or more units of the plurality of assembly lines **104(a)-104(n).** In an exemplary embodiment, the DI platform **110** may be configured to retrieve and collate data from the one or more units of the plurality of assembly lines **104(a)-104(n)** in different formats and store said collated data. In an essential embodiment, the DI platform **110** may be configured to collate data from one or more units across different assembly lines **104(a)-104(n)** over a period of time and archive old, processed data into an IIOT based data lake **112.** Further, the DI platform **110** may be configured to store real-time data in a scalable NOSQL data store in the Industrial Internet of Things (IIOT) based data lake **112** to allow the analytical system **102** to provide predictive and preventive analysis for the one or more machines/units in real time. In an exemplary embodiment, the DI platform **110** is an Industrial Internet of Things (IIOT) based platform that allows the interface between the various machines/units of the assembly lines **104(a)-104(n)** and the DI platform **110** encrypted thereby increasing the data security of the system **102.**

Those skilled in the art will appreciate that the one or more units in the plurality of assembly lines **104(a)-104(n)** may include but are not limited to Solder Paste Inspection (SPI) machine/unit, placement machine/unit, Pre-reflow AQI unit and Post-reflow AQI unit and IC testing unit and Functional testing unit, as shown in **Figure 2****.**

Although, from the above embodiment, it is clear that the analytical system **102** may be configured to work in conjunction with one or more assembly lines at a time. However, for the sake of clarity and understanding, the forthcoming paragraphs of the present disclosure are explained using an embodiment where analytical system **102** only works in conjunction with one assembly line **104(a).** However, the same is not to be considered limiting in any sense.

Looking at **Figure 1** in conjunction with **Figure 2****,** that discloses by way of a block diagram **200** the DI platform **110** interacting with various units of the assembly line **104(a),** in accordance with some embodiments of the present disclosure. According to an embodiment of the present disclosure, the DI Platform **110** may comprise a data adaptor **202,** a memory **204** and at least one processor **206.** The data adaptor **202** works as a gateway for interaction between various machines/units, in the assembly line **104(a),** from different makers and the DI platform **110.** In particular, the data adaptor **202** may be configured to seamlessly collate data from one or more machines/units (Solder Paste Inspection (SPI) machine/unit, placement machine/unit, Pre-reflow AQI unit and post-reflow AQI unit and IC testing unit and functional testing unit) in the assembly line **104(a)** in different formats and pass the collated data to the at least one processor **206.** Further, the at least one processor **206** is configured to convert the collated data in different formats into a unified format, adapting international industrial standard ANSI/ISA-95.

Further, as shown in **Figure 1****,** the analytical system **102** may also include an Artificial Intelligence (AI) platform **114.** The AI platform **114** may remain operatively coupled to the DI platform **110** and is configured to fetch the collated data from the DI platform **110** and process said collated data. In an exemplary embodiment, the AI platform **114** may be configured to use one or more machine learning techniques to process the collated data and generate predictive and preventive analysis for the one or more units (Solder Paste Inspection (SPI) machine/unit, placement machine/unit, Pre-reflow AQI unit and post-reflow AQI unit and IC testing unit and functional testing unit) present in the assembly line **104(a).**

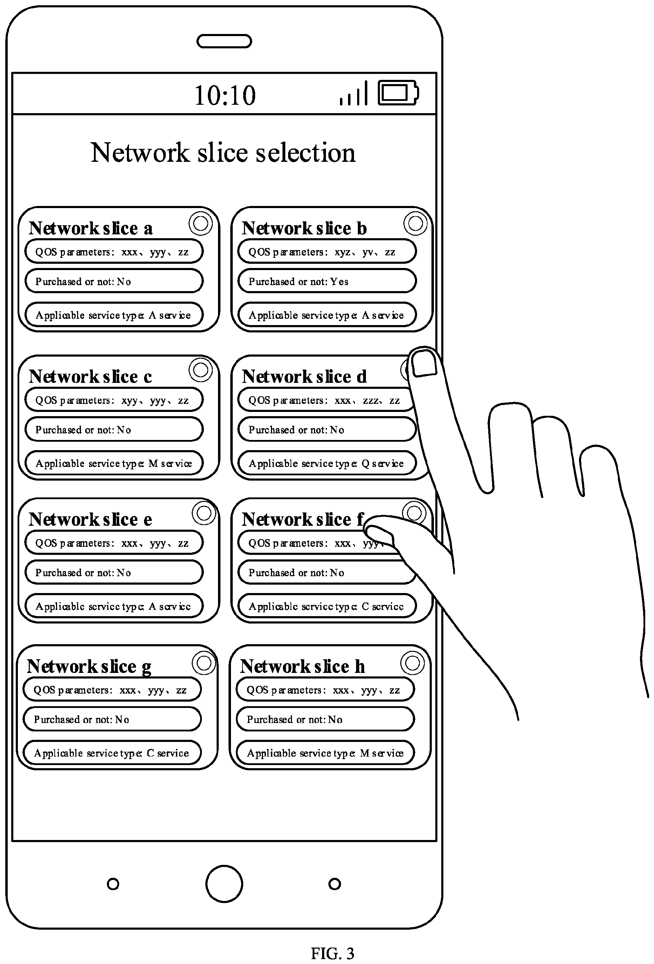

To understand how AI platform **114** works to achieve the above objective, reference is now made to **Figure 3****.** In an aspect, **Figure 3** disclose the detailed block diagram **300** of the AI platform **114.** In particular, as shown in **Figure 3****,** the AI platform **114** may be seen having a neural network **302.** In an embodiment, the neural network **302** may include one or more processing unit **304** configured to process the collated data received from the DI Platform **110** in combination with one or more analytical modules. In an aspect of the present disclosure, said one or more analytical modules may include a descriptive analytics module **306** configured to process the collated data to enable the one or more operators of the operator's system **108(a)-108(n)** to get an overview of various aspects of the different units (Solder Paste Inspection (SPI) machine/unit, placement machine/unit, Pre-reflow AQI unit and post-reflow AQI unit and IC testing unit and functional testing unit) of the assembly line **104(a).**

Precisely, the descriptive analytics module **306** may be configured to provide an overview of various aspects of the different machines/units of the assembly line **104(a)** for a pre-determined time interval by presenting a plurality of Key Performance Indicators (KPI) to the one or operators of the operator's system **108(a)-108(n)** through graphs and tables. Specifically, said KPI may include at least one of key count of the product coming out of the assembly line, reject ratio of the product, rate of production, Takt time, Overall unit Effectiveness (OEE), downtime and similar other performance indicators.

In an exemplary aspect, the one or more processing unit **304** may include, but not restricted to, a general-purpose processor, a Field Programmable Gate Array (FPGA), an Application Specific Integrated Circuit (ASIC), a Digital Signal Processor (DSP), microprocessors, microcomputers, micro-controllers, central processing units, state machines, logic circuitries, and/or any devices that manipulate signals based on operational instructions. A processor may also be implemented as a combination of computing devices, e.g., a combination of a DSP and a microprocessor, a plurality of microprocessors, one or more microprocessors in conjunction with a DSP core, or any other such configuration.

Further, as shown in **Figure 3****,** the one or more analytical modules of the AI platform **114,** may also include a diagnostic analytics module **308** configured to analyze the processed data to provide one or more causes for possible breakdown of the one or more units in the assembly line **104(a).** In an exemplary embodiment, the diagnostic analytics module **308** may use one or more advanced probabilistic causal techniques to identify top 'n ' potential causal elements for the breakdown in the assembly line **104(a).** This allows the diagnostic analytics module **308** to monitor the data contextually before taking any decision. In an aspect, by making the predictions using said probabilistic causal techniques, the diagnostic analytics module **308** is able to reduce the maintenance time and increases the overall productivity within the assembly line **104(a).**

The one or more analytical modules (as shown in **Figure 3****)** of the AI platform **114** may further include a condition monitoring module **310** operatively coupled to the diagnostic analytics module **308.** The condition monitoring module **310** is configured to continuously monitor trend of the generated predictive and preventive analysis and to provide visual intuition to the one or more operators of the operator's system **108(a)-108(n)** of said trends.

Moving ahead the one or more analytical modules of the AI platform **114** (as shown in **Figure 3****)** may further include a predictive analytics module **312** configured to predict failure of the one or more unit in the assembly line, in advance, by mapping the generated predictive and preventive analysis with the data present in the data lake **112,** using one or more machine learning techniques. Additionally, the AI platform **114** among various above discussed analytical modules may also include a prescriptive analytics module **314** configured to advise one or more possible solutions to mitigate the failure, using one or more machine learning techniques.

In an essential embodiment, the AI platform **114** may also include an Anomaly Detection module **316.** The Anomaly detection module **316** is an important module in SMT assembly line as an unexpected error can propagate due to external factors such as Part Number change, Process changes and Stencil change. To counter the error due one the external factors the Anomaly detection module is configured to record and learn all the events and the pattern based on the statistical inference technique.

To achieve the above objectives, the AI platform **114** of the system **102** may include one or more statistical, machine learning, and deep learning methods specifically tuned for data analytics tasks for SMT manufacturing. Further, said AI platform **114** may represent an end-to-end workflow system that manages at least one of data acquisition, automatic selection of machine learning models, deployment of those models and continuous monitoring of the model performance to carry out the processes performed by one or more above discussed analytical modules **306-316**.

In one embodiment, to carry out the predictive and preventive analysis for the assembly line **104(a),** the AI platform **114** may be pre-trained using batch loading technique during offline mode. The batch loading technique includes retrieving old data archived in the data lake **114** and training AI platform **114** over said data. In another embodiment, to carry out the predictive and preventive analysis for the assembly line **104(a)** the AI platform **114** may be trained using the real-time data stored in the NOSQL data store during online mode.

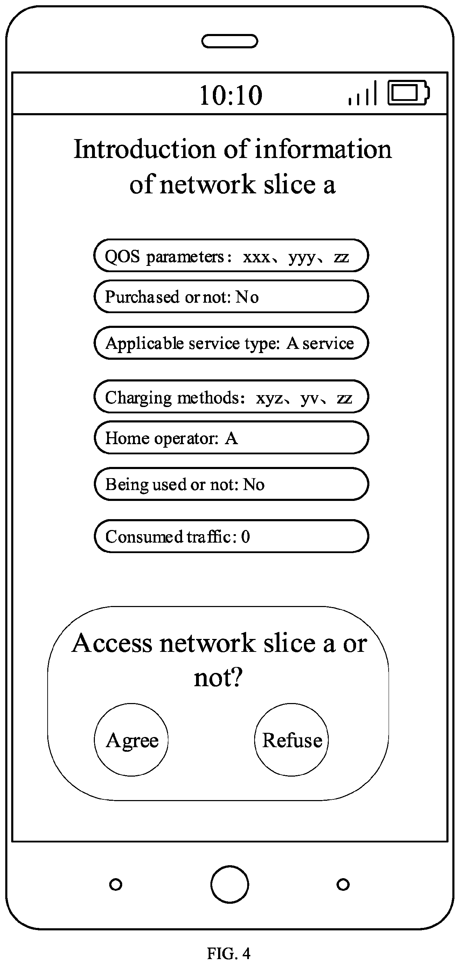

Further, as shown in **Figure 1****,** the analytical system **102** may further include a Digital Twin Simulation (DTS) platform **116** operatively coupled to the AI platform **114** and the DI platform **110.** In particular, the DTS platform **116** is configured to simulate an exact replica of all the units present in the assembly lines **104(a)-104(n),** in the same order and present the simulated replica of the assembly line 104(a) (in said case) at the one or more operator systems **108(a)-108(n).** Precisely, the DTS platform **116** is configured to generate exact replica of the physical machine/units, in the assembly line **104(a),** from the microscale to macro geometric level so that it can be represent the assembly line **104(a)** at the operator systems **108(a),** preferably in said case, as shown in **Figure 4****.**

Further, in a specific embodiment, it is the DTS platform **116** which makes the operations of one or more analytical modules **306-316** of the AI platform **114** (as discussed in foregoing paragraphs) possible. For example, the descriptive analytics module **306** of the AI platform **114** that is configured to process the collated data and enables the one or more operators of the operator's system **108(a)-108(n)** to get an overview of various aspects of the different units of the assembly line **104(a)** is performed over the simulated replica's generated by the DTS platform **116,** as shown in **Figure 4****.**

Further, the DTS platform **116** is configured to provide visual representation of the predictive and preventive analysis, generated by the AI platform **114,** in readable format to one or more operators in the assembly line, **104(a)** over the simulated replica. Thus, in a way DTS platform **116** also assists the diagnostic analytics module **308,** the condition monitoring module **310,** the predictive analytics module **312,** and the Anomaly detection module **316** to perform their functions as discussed in forgoing paragraphs, repetition of same is avoided for the sake of brevity.

Additionally, the DTS platform **116** may be configured to allow, through the simulated replica, the one or more operators of the operating systems **108(a)-1o8(n)** in the assembly line **104(a)** to take at least one action, in response to the generated predictive and preventive analysis and provide the at least one action taken by the one or more operators, of the operating systems **108(a)-108(n),** in the assembly line **104(a)** as feedback signal to AI platform **114** to improve prediction rate of said system **102** in future. The feedback provided to the AI platform **114** is essential in reducing the false calls/false positive rate of the analytical system **102.**

The DTS platform **116** may include a memory and a processor to perform the above operations. In an aspect, the memory may be communicatively coupled to the processor and may comprise various instructions, which when executed cause the processor to perform the operations discussed in above paragraphs. The memory may include a Random-Access Memory (RAM) unit and/or a non-volatile memory unit such as a Read Only Memory (ROM), optical disc drive, magnetic disc drive, flash memory, Electrically Erasable Read Only Memory (EEPROM), a memory space on a server or cloud and so forth.

Further, as shown in **Figure 1****,** the system **102** may further include a notification platform **118** operatively coupled to the AI platform **114** and the DTS platform **116.** Said notification platform **118** allows the AI platform **114** to share notification regarding predictive and preventive analysis of the one or more units (Solder Paste Inspection (SPI) machine/unit, placement machine/unit, Pre-reflow AQI unit and post-reflow AQI unit and IC testing unit and functional testing unit) in the assembly line **104(a)** with the one or more operators via the via the operator system **108(a)-108(n).**

Thus, from the above embodiments it is clear that the said system **102** is configured to collate data from one or more machines/units in the assembly lines **104(a)-104(n)** (including Solder Paste Inspection (SPI) unit, Placement unit, Pre-Reflow AOI unit, Post Reflow AOI unit) and predict functional error at next stage, thereby improving efficiency so that the one or more operators can analyze the cause of the error and prevent downtime as errors that occurs due to various factors.

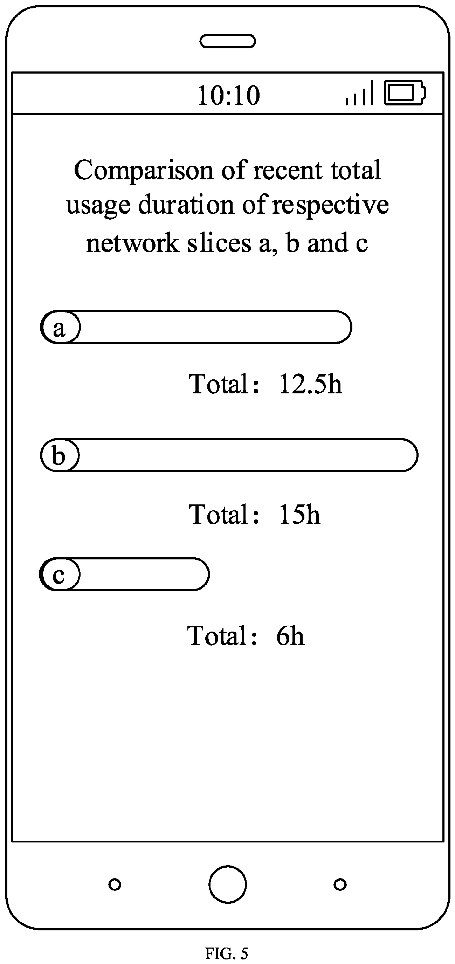

For better understanding, the embodiments discussed in forgoing paragraphs may be understood by means of an example. In an exemplary embodiment, as shown in **Figure 5****,** to predict the next preventive maintenance for the SPI machine/unit in the assembly line **104(a),** the system **102** is configured to perpetually monitor various KPI's of the SPI machine/unit. The monitored KPI's may include but are not limited to count, reject ratio, rate, Takt time, Overall Equipment Effectiveness (OEE) and downtime). The monitored parameters are processed by the system **102,** using one or techniques discussed in disclosure of **Figures 1-3****,** along with operator feedback, input from various IIOT sensors and SPI machine/unit database to predict an error in the SPI machine/unit, ahead of time and predict the time for next maintenance, to avoid the entire assembly line 104(a) from being shut down.

Such preventive maintenance of SPI machines/unit stimulates the probability of botches and plans repairs or servicing of the machines to reduce the probability of malfunctions or degradation of services provided. Further, such preventive maintenance of the SPI machine/unit may offer various technical advantages, listed below.

The SPI Machine/unit Preventive Maintenance helps to avoid the problem of over maintenance that is performed in the factory floor which cost several thousand of dollar and also leads to loss of productivity. Further, it also provides SPI stencil change notification alert in the assembly line **104(a)** during machine maintenance, or if there is a product change. Thus, operators may be advised to change stencils if a certain number of boards are crossed in the SMT line. In an exemplary aspect, the stencil needs to be changed if the spatial grouping detects a pattern change on the boards. For example, it can be detected if the problem is due to the stencil sheet, when an error occurs vertically or horizontally in the PCB board.

Additionally, such preventive maintenance allows SPI tolerance limits to be analyzed based on solder paste volume distribution obtained from mass data collected. Furthermore, an unskilled worker can be may made productive in a shorter interval by identifying machine error escape, such that when a SPI machine/unit passes a particular board, but the same board fails due to a printing problem, corrective action can be taken to avoid the error progressing to the next stage.

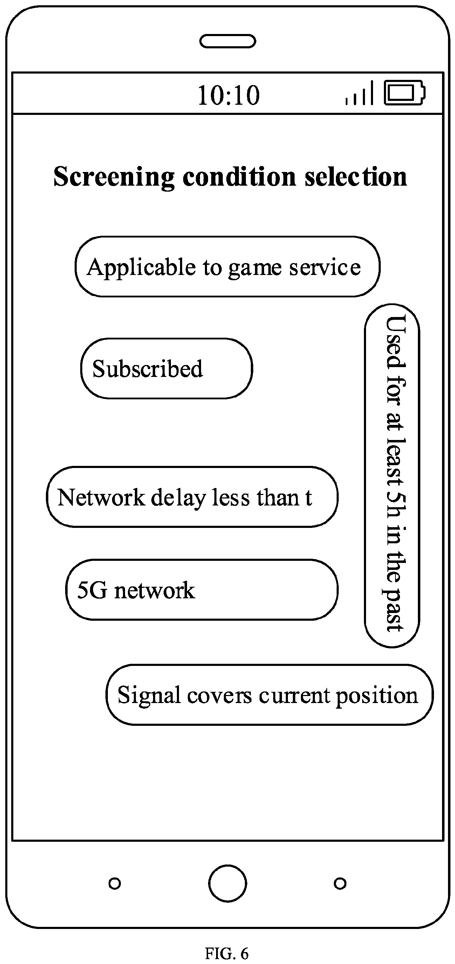

In another exemplary embodiment, the analytical system **102** may be configured to predict a solder pad failure in the SPI machine/unit in the assembly line **104(a).** In said embodiment, as shown in **Figure 6****,** the analytical system **102** may be configured to monitor along with various KPI's (discussed in **Figure 5****)** at least one of volume of PCB coming out of SPI machine/unit, Offset in PCB along X axis, Offset in PCB along Y axis, temperature of the SPI machine/unit and humidity and other related parameters. The analytical system **102** may further be configured to feed these parameters to the one or more analytical modules **306-316** of the AI platform **114** for further processing. It is to be appreciated that the processing done at various modules **306-316** of the AI platform **114** is in accordance with techniques discussed in **Figures 1-3** and same is not explained for the sake of brevity. Further, the AI module **114,** based on said processing, is configured to Predicting the solder pad failure ahead of time. Such failure detection techniques not only avoid the complete board from failure but provides various other technical advantages. Firstly, it reduces the material wastage and reduces the operator effort required to find the root cause of the problem. Secondly, it increases the several KPI defined by the manufacturing sector such as yield, OFF and cycle time etc.

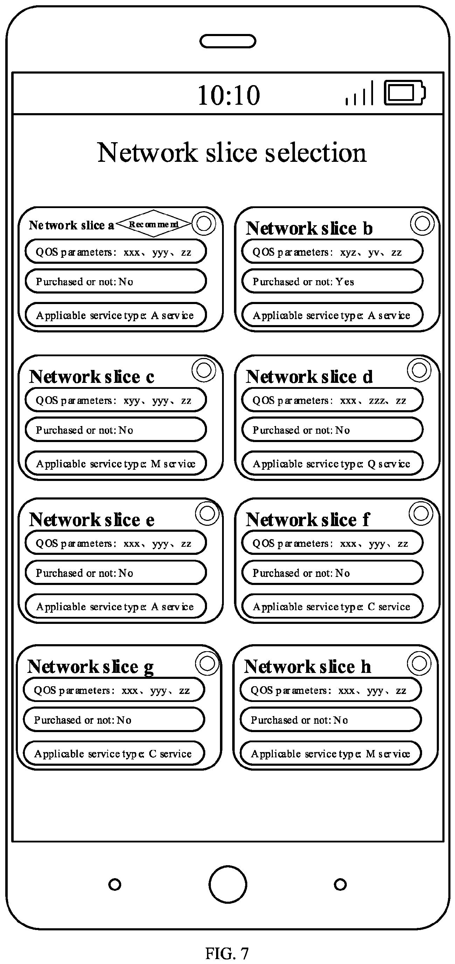

In another exemplary embodiment, the analytical system **102** is configured to predicting the Placement, Pre-Reflow, Post Reflow and Functional Errors error at SPI stage using the data available in SPI, as shown in **Figure 7****.** In an aspect, this helps to improve efficiency so that an Operator can analyze the cause of the error and prevent downtime as errors may be due to one of board, paste and printing problems.

Specifically, to achieve said objectives (as shown in **Figure 7****)** the analytical system 102 may be configured to collate data regarding at least one of SPI features, placement features, pre-reflow features, post-reflow features and MFT features from the assembly line **104(a)** using DI platform **110.** Said features are then fed to the AI platform **114,** wherein the AI platform **114** is pre-trained, using the offline data (i.e., collated features) to predict a failure in the assembly line **104(a).** Furthermore, in another embodiment, the AI platform **114** is trained using the real-time/live data (i.e., SPI features, placement features, pre-reflow features, post-reflow features and MFT features obtained in real-time) to predict failure in the assembly line **104(a).** It is because of dual training of the AI platform **114** that the analytical system **102** is able to predict failure more accurately ahead of time and recommend necessary corrective action to one or more operators.

In a non-limiting embodiment, using the techniques discussed in **Figures 1-3****,** the analytical system **102** may be configured to identify various errors at different machines/units in the assembly line **104(a)** ahead of time and suggest preventive maintenance for such machine/failure. Table below indicates, by way of examples, various types of errors that can be identified using the analytical system **102.** Further, it is to be appreciated that these are just exemplary embodiment and the analytical system **102** may be configured to identify many more error within any assembly line.

| Placement Errors | Pre-Reflow & Post-Reflow Errors | MFT Errors |
|---|---|---|
| • Shifted Component | • Pad Overhang | Solderability problem |
| | • Dimension | |
| • Bridging | • Mechanical Damage | |
| • Tombstoning | • Excess Solder | |
| • Component Not Soldered | Other Soldering Effect | |
| | • Solder Residues | |

In a non-limiting embodiment of the present disclosure, to identify one of the above errors the analytical system **102** uses anomaly detection technique to discern rare patterns that do not conform to expected behavior, called outliers. Those skilled in the art will appreciate that when any machine works in an unreliable manner anomaly detection comes into place and the mishaps generated are arrested before it escalates into a major issue in the production line. Sudden increase in false calls and the reason for the sudden increase in offset problems are considered as Anomalies by the domain expert happened due to external factors.

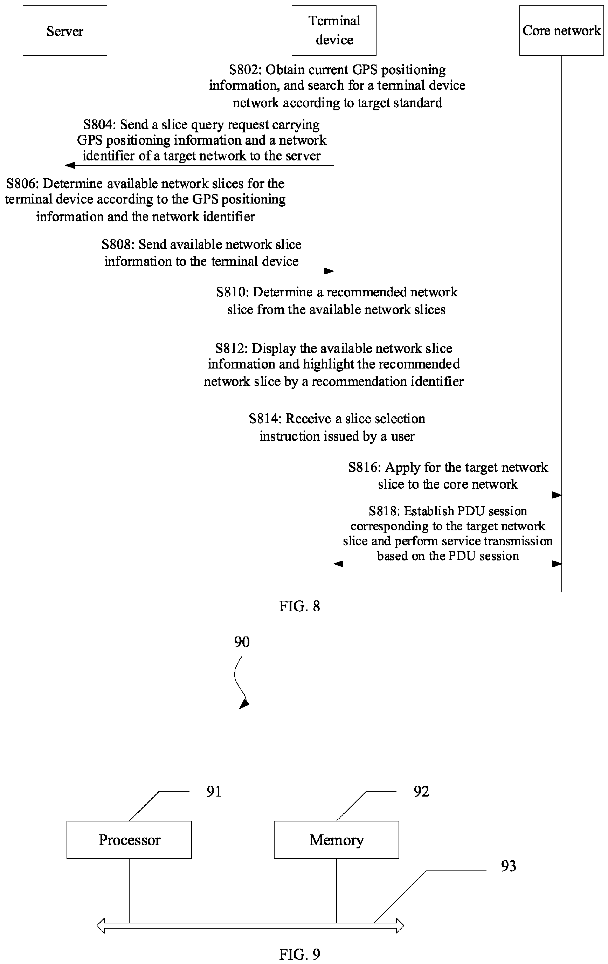

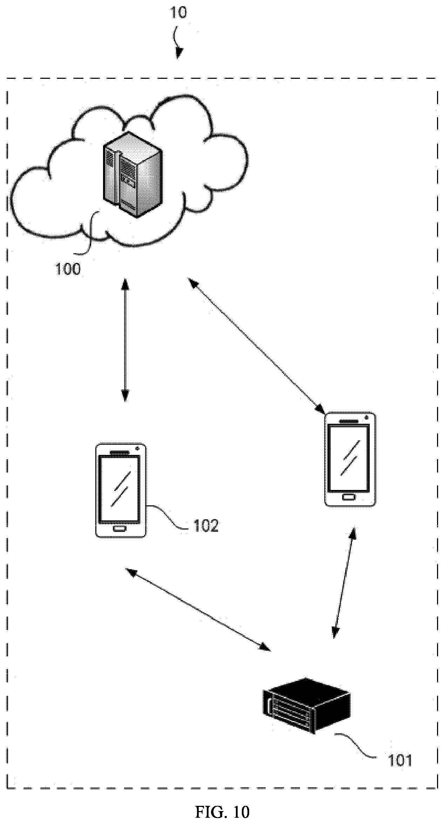

Referring now to **Figure 8****,** a flowchart is described illustrating an exemplary method **800** for predicting errors in SMT manufacturing assembly line, a head of time, suggesting preventive maintenance, according to an embodiment of the present disclosure. The method **800** is merely provided for exemplary purposes, and embodiments are intended to include or otherwise cover any methods or procedures for predicting errors in SMT manufacturing assembly line, a head of time, suggesting preventive maintenance.

The method **800** may include, at block **802,** collating data from one or more units in an assembly line **104(a)-104(n)** in different formats and storing said collated data in data lake **112.** The operations of block **802** may be performed by the one or more processor **206** of the DI platform **110** in combination with adaptor **202** of **Figure 2****.**

The method **800** may further include, at block **804,** fetching the collated data and processing said collated data, using one or more machine learning techniques. Further, at block **806,** the method **800** may include generating predictive and preventive analysis for the one or more units present in the assembly line **104(a)-104(n),** in response to said processing. The operations of blocks **804** and **806** are performed by the AI platform **114** of system **102** of **Figure 1****.**

In one non-limiting embodiment of the present disclosure, although not exclusively disclose but the method **800** may include processing the collated data to enable the one or more operators to get an overview of various aspects of the different units of the assembly line **104(a)** for a pre-determined time interval by presenting a plurality of Key Performance Indicators (KPI) to the one or operators through graphs and tables. Said step may be performed by the descriptive analytics module 306 of the AI platform 114.

The method **800** may further include the steps of analyzing the processed data to provide one or more causes for breakdown of the one or more units in the assembly line **104(a)** and continuously monitoring trend of the generated predictive and preventive analysis and providing visual intuition to the one or more operators of same. In an exemplary embodiment, the above steps are performed by the diagnostic analytics module 308 and the condition monitoring module **310** of the AI platform.

In an embodiment, the method **800** may further be configured for predicting failure of the one or more unit in the assembly line **104(a),** in advance, by mapping the generated predictive and preventive analysis with the data present in the data lake, using machine learning. Subsequently, the method **800** may be configured for advising one or more possible solutions, to the one or more operators of the operating systems **108(a)-108(n)** to mitigate the failure, using machine learning. The above steps are performed by the predictive analytics module **312** and the prescriptive analytics module **314** respectively.

In an embodiment, in order for predicting failure of the one or more unit in the assembly line **104(a),** in advance and performing preventive analysis, the method **800** may disclose collating data from one or more units across different assembly lines **104(a)-104(n)** over a period of time and archiving old-processed data into the data lake to train the AI platform **114.** The method **800** may further include storing real-time data in a scalable NOSQL data store in the data lake **112** for providing predictive and preventive analysis for the one or more units in real time.

Moving ahead, the method **800,** at block **808,** may include simulating an exact replica of all the units present in the assembly line **104(a),** in the same order, i.e., as present in the original assembly line **104(a).** At block **810,** the method **800** includes providing visual representation of the predictive and preventive analysis thus generated, in readable format to one or more operators in the assembly line **104(a),** over the simulated replica using the one or more operator systems **108(a)-108(n).**

Further, the method **800,** at step **812** discloses allowing the one or more operators in the assembly line **104(a)** to take at least one action, in response to the generated predictive and preventive analysis and providing the at least one action taken by the one or more operators in the assembly line **104(a)** as feedback signal to improve the prediction rate of said system **102,** at step **814.** The operations of blocks **808-814** may be performed by the DTS platform **116** of **Figure 1** and **Figure 3****.**

Finally, at block **816,** the method **800** may include providing notification regarding predictive and preventive analysis of the one or more units in the assembly line **104(a)** to the one or more operators. The operations of block **816** may be performed by the notification platform **118** of **Figure 1****.**

In an embodiment, the method **800** may include collating data from at least one of Solder Paste Inspection (SPI) unit, Placement unit, Pre-Reflow AOI unit, Post Reflow Unit to predict Functional error at next stage, thereby improving efficiency so that the one or more operators can analyze the cause of the error and prevent downtime as errors that occurs due to various factors.

The above method **800** may be described in the general context of computer executable instructions. Generally, computer executable instructions can include routines, programs, objects, components, data structures, procedures, modules, and functions, which perform specific functions or implement specific abstract data types.

The order in which the various operations of the methods are described is not intended to be construed as a limitation, and any number of the described method blocks can be combined in any order to implement the method. Additionally, individual blocks may be deleted from the methods without departing from the spirit and scope of the subject matter described herein. Furthermore, the methods can be implemented in any suitable hardware, software, firmware, or combination thereof.

The various operations of methods described above may be performed by any suitable means capable of performing the corresponding functions. The means may include various hardware and/or software component(s) and/or module(s), including, but not limited to the various platforms and modules of **Figure 1 and Figure 2****.** Generally, where there are operations illustrated in Figures, those operations may have corresponding counterpart means-plus-function components.

It may be noted here that the subject matter of some or all embodiments described with reference to **Figures 1-3** may be relevant for the method and the same is not repeated for the sake of brevity.

In a non-limiting embodiment of the present disclosure, one or more non-transitory computer-readable media may be utilized for implementing the embodiments consistent with the present disclosure. Certain aspects may comprise a computer program product for performing the operations presented herein. For example, such a computer program product may comprise a computer readable media having instructions stored (and/or encoded) thereon, the instructions being executable by one or more processors to perform the operations described herein. For certain aspects, the computer program product may include packaging material.

Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

The terms "including", "comprising", "having" and variations thereof mean "including but not limited to", unless expressly specified otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the appended claims.

## Claims

1. An analytical system for Surface Mount Technology (SMT), said system comprising:
a Data Integration (DI) platform configured to collate data from one or more units in an assembly line, wherein the DI platform is configured to receive and collate data from the one or more units in different formats and store said collated data;
an Artificial Intelligence (AI) platform operatively coupled to the DI platform, said AI platform is configured to fetch the collated data from the DI platform and process the collated data, using one or more machine learning techniques, to generate predictive and preventive analysis for the one or more units present in the assembly line;
a Digital Twin Simulation (DTS) platform operatively coupled to the AI platform and the DI platform, said DTS platform is configured to:
simulate an exact replica of all the units present in the assembly line, in the same order;
provide visual representation of the predictive and preventive analysis, generated by the AI platform, in readable format to one or more operators in the assembly line, over the simulated replica;
allow the one or more operators in the assembly line to take at least one action, in response to the generated predictive and preventive analysis; and
provide the at least one action taken by the one or more operators in the assembly line as feedback signal to AI platform to improve prediction rate of said system; and
a notification platform operatively coupled to the AI platform and the DTS platform, wherein said notification platform allows the AI platform to share notification regarding predictive and preventive analysis of the one or more units in the assembly line with the one or more operators.

2. The system of claim 1, wherein the DI platform is configured to:
collate data from one or more units across different assembly lines over a period of time;
archive old processed data into the data lake to train the AI platform; and
store real-time data in a scalable NOSQL data store in the data lake to allow the AI platform to provide predictive and preventive analysis for the one or more units in real time, wherein the system is further configured to:
pre-train AI platform using batch loading technique during offline mode, wherein batch loading technique includes retrieving old data archived in the data lake and training AI platform over said data; and
train AI platform using the real-time data stored in the NOSQL data store, during online mode.

3. The system of claim 1, wherein the AI platform comprises:
a neural network comprising:
one or more processing unit configured to process the collated data, from the one or more units in the assembly line, in combination with one or more analytical modules, wherein said analytical modules comprises:
a descriptive analytics module configured to process the collated data to enable the one or more operators to get an overview of various aspects of the different units of the assembly line for a pre-determined time interval by presenting a plurality of Key Performance Indicators (KPI) to the one or operators through graphs and tables, wherein the key performance indicators include at least one of: count of the product coming out of the assembly line; reject ratio of the product; rate of production; Takt time; overall unit effectiveness; and downtime;
a diagnostic analytics module configured to analyze the processed data to provide one or more causes for breakdown of the one or more units in the assembly line;
a condition monitoring module configured to continuously monitor trend of the generated predictive and preventive analysis and to provide visual intuition to the one or more operators;
a predictive analytics module configured to predict failure of the one or more unit in the assembly line, in advance, by mapping the generated predictive and preventive analysis with the data present in the data lake, using machine learning; and
a prescriptive analytics module configured to advise one or more possible solutions to mitigate the failure, using machine learning.

4. The system of claim 1, wherein the AI platform is configured to perform at least one of manage data acquisition, automate selection of machine learning models based on type of data collated, deployment of selected machine learning models and continuous monitoring of said model performance.

5. The system of claim 1, wherein said system comprises collating data from at least one of Solder Paste Inspection (SPI) unit, Placement unit, Pre-Reflow AOI unit, Post Reflow AOI unit for predicting Functional error at next stage, thereby improving efficiency so that the one or more operators can analyze the cause of the error and prevent downtime as errors that occurs due to various factors.

6. The system of claim 1, wherein the DI platform includes a data adaptor that provides a gateway for interaction between machines, in the assembly line, from different makers and the DI platform, said data adaptor is configured to seamlessly collate data from all the machines in different formats and convert all the different data formats into a unified format.

7. An analytical method for Surface Mount Technology (SMT), said method comprising:
collating data from one or more units in an assembly line in different formats and storing said collated data;
fetching the collated data and processing said collated data, using one or more machine learning techniques;
generating predictive and preventive analysis for the one or more units present in the assembly line, in response to said processing;
simulating an exact replica of all the units present in the assembly line, in the same order;
providing visual representation of the predictive and preventive analysis thus generated, in readable format to one or more operators in the assembly line, over the simulated replica;
allowing the one or more operators in the assembly line to take at least one action, in response to the generated predictive and preventive analysis;
providing the at least one action taken by the one or more operators in the assembly line as feedback signal to improve the prediction rate of said system; and
providing notification regarding predictive and preventive analysis of the one or more units in the assembly line with the one or more operators.

8. The method of claim 7, wherein said method further comprise:
collating data from one or more units across different assembly lines over a period of time;
archiving old processed data into the data lake to train the AI platform;
storing real-time data in a scalable NOSQL data store in the data lake for providing predictive and preventive analysis for the one or more units in real time;
pre-training AI platform using batch loading technique during offline mode, wherein batch loading technique includes retrieving old data archived from the data lake and training AI platform over said data; and
training AI platform using the real-time data stored in the NOSQL data store, during online mode.

9. The method of claim 7, wherein said method further comprises:
processing the collated data to enable the one or more operators to get an overview of various aspects of the different units of the assembly line for a pre-determined time interval by presenting a plurality of Key Performance Indicators (KPI) to the one or operators through graphs and tables, wherein the key performance indicators include at least one of: count of the product coming out of the assembly line; reject ratio of the product; rate of production; Takt time; overall unit effectiveness; and downtime;
analyzing the processed data to provide one or more causes for breakdown of the one or more units in the assembly line;
continuously monitoring trend of the generated predictive and preventive analysis and providing visual intuition to the one or more operators;
predicting failure of the one or more unit in the assembly line, in advance, by mapping the generated predictive and preventive analysis with the data present in the data lake, using machine learning; and
advising one or more possible solutions to mitigate the failure, using machine learning.

10. The method of claim 7, wherein said method further comprises:
performing at least one of managing data acquisition, automating selection of machine learning models based on type of data collated, deploying selected machine learning models and continuous monitoring of said model performance.

11. The method of claim 7, wherein said method further comprises collating data from at least one of Solder Paste Inspection (SPI) unit, Placement unit, Pre-Reflow AOI unit, Post Reflow Unit to predict Functional error at next stage, thereby improving efficiency so that the one or more operators can analyze the cause of the error and prevent downtime as errors that occurs due to various factors.

12. The method of claim 7, wherein said method further comprises:
providing a gateway for interaction between machines, in the assembly line, from different makers and the DI platform, to seamlessly collate data from all the machines in different formats; and
converting all the different data formats into a unified format.

13. A non-transitory computer readable media storing one or more instructions executable by at least one processor, the one or more instructions comprising:
one or more instructions for collating data from one or more units in an assembly line in different formats and storing said collated data;
one or more instructions for fetching the collated data and processing said collated data, using one or more machine learning techniques;
one or more instructions for generating predictive and preventive analysis for the one or more units present in the assembly line, in response to said processing;
one or more instructions for simulating an exact replica of all the units present in the assembly line, in the same order;
one or more instructions for providing visual representation of the predictive and preventive analysis thus generated, in readable format to one or more operators in the assembly line, over the simulated replica;
one or more instructions for allowing the one or more operators in the assembly line to take at least one action, in response to the generated predictive and preventive analysis;
one or more instructions for providing the at least one action taken by the one or more operators in the assembly line as feedback signal to improve the prediction rate of said system; and
one or more instructions for providing notification regarding predictive and preventive analysis of the one or more units in the assembly line with the one or more operators.

14. The non-transitory computer readable media of claim 13, wherein the one or more instructions further comprise:
one or instructions for collating data from one or more units across different assembly lines over a period of time;
one or instructions for archiving old processed data into the data lake to train the AI platform;
one or instructions for storing real-time data in a scalable NOSQL data store in the data lake for providing predictive and preventive analysis for one or more units in real time;
one or instructions for pre-training AI platform using batch loading technique during offline mode, wherein batch loading technique includes retrieving old data archived from the data lake and training AI platform over said data; and
one or instructions for training AI platform using the real-time data stored in the NOSQL data store, during online mode.

15. The non-transitory computer readable media of claim 13, wherein the one or more instructions further comprise:
one or instructions for processing the collated data to enable the one or more operators to get an overview of various aspects of the different units of the assembly line for a pre-determined time interval by presenting a plurality of Key Performance Indicators (KPI) to the one or operators through graphs and tables, wherein the key performance indicators include at least one of: count of the product coming out of the assembly line; reject ratio of the product; rate of production; Takt time; overall unit effectiveness; and downtime;
one or instructions for analyzing the processed data to provide one or more causes for breakdown of the one or more units in the assembly line;
one or instructions for continuously monitoring trend of the generated predictive and preventive analysis and providing visual intuition to the one or more operators;
one or instructions for predicting failure of the one or more unit in the assembly line, in advance, by mapping the generated predictive and preventive analysis with the data present in the data lake, using machine learning; and
one or instructions for advising one or more possible solutions to mitigate the failure, using machine learning.
